# EUROPÄISCHE PATENTSCHRIFT

(11) **EP 2 294 960 B1**
(45) Veröffentlichungstag und Bekanntmachung des Hinweises auf die Patenterteilung: **23.12.2015**
(21) Anmeldenummer: 10175024.8
(22) Anmeldetag: 02.09.2010
(51) Int. Cl.: G05D 1/00

(54) **Verfahren zum Betreiben eines Reinigungsroboters**
Method for operating a cleaning robot
Procédé destiné au fonctionnement d'un robot de nettoyage

(30) Priorität: 11.09.2009 DE 102009041362
(43) Veröffentlichungstag der Anmeldung: 16.03.2011
(73) Patentinhaber: Vorwerk & Co. Interholding GmbH, 42275 Wuppertal (DE)
(72) Erfinder: Meyer, Frank, 58640 Iserlohn (DE); Schlischka, Patrick, 42349 Wuppertal (DE); Wallmeyer, Mario, 40219 Düsseldorf (DE); Sauerwald, Andres, 46238 Bottrop (DE)
(74) Vertreter: Müller, Enno

(56) Entgegenhaltungen:
- EP-A2- 2 058 720
- WO-A1-2007/051972
- WO-A2-2009/097354
- US-A1- 2002 153 184

## Beschreibung

Die Erfindung betrifft ein Verfahren zum Betreiben eines Reinigungsroboters, vorzugsweise eines Kehr- und/oder Saugroboters, wobei der Roboter eingerichtet ist, Räumlichkeiten kartenmäßig zu erfassen, zum Verfahren des Roboters auf dem Boden eines oder mehrerer Räume, und wobei weiter der Roboter über Sensormittel verfügt, um die Position innerhalb eines so erfassten Raumes zu bestimmen.

Verfahren der in Rede stehenden Art zum Betreiben von autonom arbeitenden Bodenreinigungsgeräten, insbesondere für den Haushaltsbereich, sind bekannt. Der bevorzugt akkubetriebene Reinigungsroboter weist hierzu einen internen Speicher auf, in welchem eine Karte eines oder mehrerer Räume angelegt werden kann, anhand welcher Karte eine gezielte Bodenreinigung in dem angefahrenen Raum erreicht werden kann. In der Karte sind die Raumbegrenzungen und etwaige Hindernisse in dem Raum abgelegt, so dass anhand der vorliegenden Karte eine günstige Verfahrstrategie zum Abreinigen des Bodens in dem Raum erreicht wird.

Weiter ist bekannt, den Reinigungsroboter mit Sensormitteln zu versehen, zur Positionsbestimmung des Reinigungsroboters innerhalb des erfassten Raumes, um in Abhängigkeit von der Positionsbestimmung und der angelegten Karte angepasste Verfahrstrategien einzuleiten.

Aus der WO-A1-2007/051972 ist ein Reinigungsroboter bekannt, der mit einer primären und einer sekundären Kartenerstellung arbeitet. Beide Kartenerstellungen erfolgen selbsttätig durch den Roboter im Zuge eines autonomen Verfahrens in einem Raum. Die EP-A2-2 058 720 beschreibt bei einem Reinigungsroboter eine dreidimensionale Kartenerstellung mit Hilfe von strukturiertem Licht und einer Kamera. Die WO-A2-2009/097354, welche dem Oberbegriff des unabhängigen Anspruchs 1 entspricht, offenbart Sensormittel, die bei einem Reinigungsroboter vorgesehen sein können um Hindernisse, insbesondere auch oberhalb des Reinigungsroboters, zu erfassen. Ein so ausgestatteter Reinigungsroboter kann hinsichtlich der Raumerfassung mittels eines Teach-in-Verfahrens eine Karte gespeichert haben. Es ist aber auch alternativ eine Ausbildung des Reinigungsroboters beschrieben, bei welchem eine gespeicherte Karte unter Nutzung von Markierungsmitteln erstellt ist.

Ausgehend von dem zuletzt genannten Stand der Technik beschäftigt sich die Erfindung mit der Aufgabe, ein Verfahren zum Betreiben eines Reinigungsroboters anzugeben, dass eine möglichst universelle Nutzung ermöglicht.

Diese Aufgabe ist beim Gegenstand des Anspruches 1 gelöst, wobei darauf abgestellt ist, dass der Roboter wahlweise zur Abarbeitung einer Fläche zufolge selbsttätigen Erfassens einer Räumlichkeit betreibbar ist wie auch zur Abarbeitung einer Fläche, die zuvor durch anleitendes Abfahren von Flächengrenzen eingegeben wurde, wobei in beiden Fällen bei einer Abarbeitung einer Fläche eine Überprüfung der vorgegebenen Strecke anhand von aktuell erfassten Raumgrenzen vornehmbar ist. Dem ggf. mittels Fernbedienung durch den Benutzer in einen Raum mit einem abzureinigenden Boden verbrachten Roboter stehen somit unterschiedliche Verfahren zur Abarbeitung der Fläche zur Verfügung, wobei jeweils ein Abfahren der zu reinigenden Fläche anhand einer erstellten Raumkarte erfolgt. Letztere wird beispielsweise durch ein durch den Benutzer geführtes, anleitendes Abfahren der Flächenbegrenzung erstellt, so weiter in einem sogenannten Teach-in-Verfahren. Der Benutzer führt hierbei den Roboter beispielsweise mittels Fernbedienung, alternativ über roboterseitige Tasten zur Richtungssteuerung, über die zu kartierende Fläche, welche hierbei erstellte Karte roboterintern in einem Speicher abgelegt wird. Nach einer entsprechenden Befehlsauslösung durch den Benutzer fährt der Reinigungsroboter innerhalb der abgelegten Karte die zu reinigende Fläche ab. Erfolgt ein solcher Startbefehl, ohne dass vorab eine Karte anhand eines anleitenden Abfahrens der Flächengrenzen angelegt wurde, so ist der Reinigungsroboter in der Lage, selbsttätig eine solche Karte zur späteren Abreinigung der Fläche zu erstellen, dies unter Nutzung der roboterseitigen Sensormittel. Der Roboter fährt hierbei selbsttätig die Fläche des Raumes ab, wobei die Sensormittel über eine entsprechende Abstandsmessung Hindernisse erfassen und diese als X-/Y-Koordinaten in der Karte ablegen. So verfährt der Roboter beispielsweise zunächst entlang der Raumbegrenzungen, beispielsweise entlang der Wände, um so die äußere Begrenzung der zu reinigenden Fläche abzustecken. Innerhalb dieser begrenzten Fläche werden durch sukzessives Abfahren der Fläche weitere Hindernisse, wie beispielsweise Möbel, erfasst und in der Karte mit den entsprechenden Koordinaten abgelegt. Nach einer derartig selbsttätigen Erstellung der Raumkarte startet weiter bevorzugt selbsttätig das Reinigungsprogramm unter Nutzung der abgelegten Karte, alternativ bspw. durch einen weiteren Benutzereingriff. Unabhängig davon, ob der Roboter mittels einer über ein Teach-in-Verfahren abgelegten Karte oder mittels einer selbsttätig durch Vorab-Abfahren der Räumlichkeit erstellten Karte den Reinigungsvorgang durchführt, wird die vorgegebene Strecke oder die unmittelbare Umgebung des Roboters ständig durch die roboterseitigen Sensormittel überwacht, um so eine ständige Überprüfung der Umgebung bzw. Raumgrenzen und Hindernisse mit den in der Karte abgelegten Daten zu vergleichen. So wird beispielsweise hierdurch eine Veränderung der Raumgrenzen oder auch eine Veränderung der Anordnung von etwaigen Hindernissen auf der Fläche nach der Kartenerstellung erfasst, so dass entsprechende Verhaltensstrategien des Roboters beispielsweise zum Umfahren neu hinzugekommener oder weiter beispielsweise auf der Fläche verschobener Hindernisse abzurufen sind. Die Sensormittel sind hierbei beispielsweise Ultraschall- oder Infrarotsensoren, weiter auch in Form von mechanisch wirkenden Hinderniserkennungen. Eine solche sensitive Hinderniserkennung ist beispielsweise aus der DE 103 57 636 A1 bekannt. Zufolge der sensormäßigen Abtastung der Roboterumgebung werden neue, in der zuvor erstellten Karte nicht registrierte Hindernisse bzw. geänderte Raumgrenzen erfasst.

Der autonome Roboter nimmt seine Umgebung mit seinen Sensormitteln in Form von Abstandswerten auf und setzt diese Informationen während der Fahrt zu einer Karte zusammen, wobei die Koordinaten der abgefahrenen Strecke in Form einer Liste in Wegpunkten im Speicher abgelegt werden. Ein Wegpunkt besteht dabei aus zwei Werten für die X- und Y-Achse der Karte, die gleichzeitig vom Roboter aufgebaut wird. Für die Orientierung innerhalb der Karte greifen Verfahren, die darauf basieren, dass die gemessenen Abstandsinformationen der aktuellen Position im Raum mit der gespeicherten Karte verglichen werden.

Es ist weiter vorgesehen, dass zur Speicherung der selbsttätig oder per Teach-in-Verfahren erstellten Karte bevorzugt ein nicht flüchtiger Speicher in dem Reinigungsroboter vorgesehen ist. Bei mehreren Räumen ist bevorzugt jeder anzufahrende Raum und entsprechend die hierzu abgelegte Karte nummeriert oder anderweitig eindeutig gekennzeichnet, so dass beispielsweise ausgelöst über eine Fernsteuerung oder ausgelöst über eine roboterseitige Taste ein Raum gezielt angefahren und gereinigt werden kann. Entsprechend sind, wie in einer bevorzugten Ausgestaltung vorgesehen, mehrere Teach-in-Flächen speicherbar. Ist der Roboter in einen Raum geführt, zu welchem eine entsprechend über Teach-in abgelegte Karte vorgesehen ist, startet dieser nach einem entsprechenden Befehl automatisch den Reinigungsvorgang der Fläche. Für das Teach-in-Verfahren wird der Reinigungsroboter bevorzugt zunächst beispielsweise mittels einer Fernbedienung in den abzureinigenden bzw. aufzunehmenden Raum geführt, wonach dem Reinigungsroboter gezielt ein Punkt innerhalb des Raumes zugewiesen wird, der als Startpunkt der Fläche innerhalb einer neu zu erstellenden Karte markiert wird. Geleitet über die Fernbedienung oder über geräteseitige Steuerungstasten wird der Roboter weiter zu einer Mehrzahl von bestimmten Punkten geführt, an welchen Punkten eine Auslösung erfolgt zur Markierung dieser Punkte innerhalb der Karte. Die zu definierende Fläche in-nerhalb des Raumes wird entsprechend durch eine Mehrzahl von abgelegten Punkten innerhalb der Karte definiert, dies weiter beispielsweise durch eine Aneinanderreihung einer Vielzahl von Einzelpunkten. Zum Abschluss des Lernprogrammes für den Roboter zur Ablegung der Karte ist weiter bevorzugt, dass durch gesonderte Betätigung der Steuerung des Roboters eingegeben wird, dass ein eingegebener Punkt der letzte Punkt der Fläche ist. Es ist hierdurch ein eindeutiger Befehl zum Abschließen der Kartierung gegeben. Es folgt hiernach eine Abspeicherung der Karte bevorzugt mit einer entsprechenden Identifizierung, damit der zugeordnete Raum später gezielt angefahren werden kann.

Weiter wird in einer bevorzugten Ausgestaltung die Fläche durch linienzugartige Verbindung der Punkte erstellt. Eine bevorzugt in dem Roboter vorgesehene Prozessorschaltung oder dergleichen erstellt anhand der einzelnen, eingegebenen Punkte durch linienzugartige Verbindung der Punkte eine Konturierung der Fläche. Durch entsprechend in dem Roboter abgelegte Algorithmen lassen sich Flächen anhand von nur weniger eingegebener Punkte erstellen. So ist beispielsweise eine Sonderfläche in Rechteckform bereits durch Eingabe von nur drei Eckpunkten definierbar, wobei der vierte Eckpunkt selbstständig berechnet wird. Alternativ, ggf. durch entsprechende Betätigung der Steuerung des Roboters, wird ausgehend von dem als letzten Punkt definierten Punkt ein Linienzug zum ersten Punkt erstellt, um so die zu kartierende Fläche zu schließen und zu definieren.

Zur Kartierung wird weiter bevorzugt an einem Eckpunkt der abzulegenden Fläche eine Funktionstaste an der Fernbedienung oder am Roboter gedrückt. Anschließend wird der Roboter bevorzugt mittels der Fernbedienung um die zu markierende Fläche geführt, wobei die Führung bevorzugt in etwa in der Nähe des Anfangspunktes endet. Auch hier wird erneut die angegebene Taste gedrückt, um die zu kartierende Fläche zu schließen.

Während dieser gesamten Zeit läuft die Raumkartierung im Roboter mit und legt den abgefahrenen Weg in der Karte ab. Anfangs- und Endpunkt werden, falls nicht deckungsgleich automatisch verbunden zu einem geschlossenen Linienzug. Diese durch den Linienzug begrenzte Fläche stellt nun einen Reinigungsbereich dar, der dann auf Knopfdruck vom Roboter angefahren wird und gereinigt wird.

Mittels der internen Bahnplanungsalgorithmen wird zum einen der Linienzug geglättet, zum weiteren auch eine Glättung innerhalb eines Streubereiches vorgenommen. So werden beispielsweise beidseitig des über die Fernbedienung vorgegebenen Verfahrweges 20 - 70 cm, beispielsweise 50 cm, hinzugerechnet und innerhalb dieses Korridors geglättet. Auch kann der abgefahrene Bereich bei Wanderkennung (entsprechend geschlossener Linienzug über eine definiert lange Strecke) automatisch bis zur Wand ergänzt werden.

Werden so mehrere Flächen (Räume) aufgenommen und gespeichert, kann das Reinigungsverhalten des Roboters vom Benutzer individuell gestaltet werden. Hierzu kann der Roboter einen internen Kalender bzw. Timer aufweisen.

Einem Raum können weiter auch mehrere (Teil-) Flächen in der Kartierung zugeordnet sein, so bspw. eine Karte der Gesamtfläche und eine Karte einer Teilfläche des Raumes, die weiter bspw. einer besonderen Pflege bedarf. Diese einzelnen Teach-in-Flächen eines Raumes sind zunächst bevorzugt einzeln, quasi "nebeneinander" im Speicher abgelegt.

In einer bevorzugten Weiterbildung ist vorgesehen, dass eine erste Teach-in-Fläche sich innerhalb oder überschneidend zu einer zweiten Teach-in-Fläche befindet. So kann beispielsweise innerhalb einer vorliegenden Karte (Teach-in-Fläche) ein Teilbereich vorgegeben werden, der auf besondere Anforderung vom Roboter unmittelbar angefahren und gereinigt wird. Es ist so eine gezielte Teilbereichsreinigung innerhalb oder auch überschneidend zu einer kartenmäßig abgelegten Fläche ermöglicht. So bietet es sich beispielsweise an, allein einen, einer stärkeren Verschmutzung ausgesetzten Teilbereich eines Raumes zu reinigen, ohne dass der gesamte Raum bearbeitet wird, weiter beispielsweise der Bereich unter und um einen Esstisch innerhalb eines Esszimmers oder weiter beispielsweise bei einem Flur allein den Wohnungs-Eingangsbereich. Ein solcher Raum-Teilbereich wird bevorzugt innerhalb der roboterseitig abgelegten Karte markiert, stellt entsprechend einen Subbereich einer Raumkarte dar. Alternativ sind derartige Teilbereiche von Gesamtflächen als gesonderte Karten abgelegt - bevorzugt ohne einen für den Roboter erkennbaren Zusammenhang zu der Gesamtfläche. Sind, wie bevorzugt, die anzufahrenden Räume und entsprechend die hierzu abgelegten Karten nummeriert oder anderweitig eindeutig gekennzeichnet, so ist dem Teilbereich eines Raumes bevorzugt eine entsprechende Unternummerierung zugeordnet, über welche beispielsweise ausgelöst über eine Fernsteuerung der Teilbereich gezielt angefahren und gereinigt werden kann. Innerhalb des angefahrenen kartierten Raumes orientiert sich der Reinigungsroboter mittels vorhandener Sensoren zur Abstandsermittlung, um den innerhalb der Karte oder alternativ den in einer gesonderten Teilkarte abgelegten Teilbereich gezielt anzusteuern. Durch das gezielte Anfahren und Abreinigen eines Teilbereiches ist die Effektivität des Reinigungsroboters erhöht.

Bevorzugt wird eine sich innerhalb oder überschneidend zu einer bereits erfassten und abgespeicherten Karte befindende Teilfläche mittels Teach-in-Verfahren erfasst und ebenfalls abgespeichert. Hierzu wird bevorzugt der Roboter zu einem bestimmten Punkt geführt und ausgelöst, so dass dieser Punkt bevorzugt innerhalb der bereits vorliegenden Karte markiert wird. Weiter wird der Reinigungsroboter zunächst beispielsweise mittels einer Fernbedienung in den, den gesondert zu reinigenden Teilbereich aufweisenden Raum geführt, alternativ durch eine entsprechende Anweisung und Anfahren des Raumes mittels der abgelegten Karte, wonach in dem, dem Roboter durch die abgelegte Kartierung bekannten Raum der Teilbereich zugewiesen wird. Hierzu wird dem Reinigungsroboter gezielt ein Punkt innerhalb des Raumes und somit innerhalb der bekannten Karte zugewiesen, von welchem Punkt aus der Reinigungsvorgang des Teilbereiches erfolgen soll. Die Zuweisung des Punktes kann mittels Fernbedienung erfolgen, alternativ durch Betätigung einer roboterseitigen Taste. Der zugewiesene Punkt, insbesondere Startpunkt der Teilfläche, wird innerhalb der vorhandenen Karte markiert, so dass hiernach für spätere Teilbereichs-Reinigungsvorgänge ein gezieltes Anfahren und Abreinigen des Teilbereiches durch den Roboter erreicht werden kann. Ausgehend von dem markierten Punkt innerhalb einer Raumkarte kann die Abreinigung eines Teilbereiches beispielsweise durch spiralförmiges Abarbeiten des Bodens bis hin zu einem vorgegebenen Radius ausgehend vom Startpunkt erfolgen. Mit Zuweisung des Startpunktes kann weiter auch beispielsweise per Tastendruck eine vorgegebene Teilbereichserstreckung dem Startpunkt zugewiesen werden, so beispielsweise ein kreisrunder Teilbereich mit vorgegebenem Radius oder ein rechteckiger Teilbereich mit vorgegebener Längs- und Breitenerstreckung, weiter beispielsweise jeweils mit einem mittigen Startpunkt.

In bevorzugter Ausgestaltung ist die Vorgabe dadurch erreicht, dass der Roboter zu einer Mehrzahl von bestimmten Punkten geführt und ausgelöst wird, so dass diese Punkte innerhalb der bereits vorliegenden Karte markiert sind. Jeder einzelne Punkt innerhalb eines kartierten Raumes wird zum Anlegen eines Subbereiches innerhalb der Karte markiert durch entsprechende Auslösung bei Erreichen des jeweiligen Punktes durch den Roboter. Entsprechend wird der innerhalb der Raumkarte zu kartierende Teilbereich durch eine Mehrzahl von abgelegten Punkten innerhalb der Karte definiert, dies weiter beispielsweise durch eine Aneinanderreihung einer Vielzahl von Einzelpunkten.

Hinsichtlich der Abspeicherung und eindeutigen Zuordnung der abgespeicherten Subfläche sowie weiter hinsichtlich des Verfahrens zur Erstellung der Karte für den Subbereich gilt das Gleiche wie hinsichtlich der Erstellung einer gesamten Raumkarte wie vorbeschrieben.

In weiter bevorzugter Ausgestaltung wird die Teilfläche auf ein vorbestimmtes Signal hin angefahren und reinigend abgefahren. Das vorbestimmte Signal kann hierbei mittels eines benutzerbetätigbaren Fernsteuermittels erfolgen, weiter beispielsweise mittels einer Funk- oder Infrarotfernbedienung, welche zugleich bevorzugt der allgemeinen Bedienung des Reinigungsroboters dient, entsprechend bevorzugt auch zur Führung des Roboters während des Teach-in-Verfahrens. Auch kann das vorbestimmte Signal direkt an dem Roboter erzeugt werden, beispielsweise mittels Tastendruck. Der Roboter fährt nach entsprechender Signalsauswertung mittels des abgelegten Kartenmaterials gezielt die Fläche bzw. Teilfläche eines Raumes an, um diesen abzureinigen.

In weiterer Ausgestaltung ist vorgesehen, dass die Sensormittel so eingerichtet sind, dass der Roboter in jeder Position eine Richtung und Entfernung einer Raumbegrenzung erkennt und dass unmittelbar nach Erfassen einer Abweichung der tatsächlichen Position von der aufgrund eines gespeicherten Ablaufs vorgegebenen Position eine Korrektur einer Fahrbewegung erfolgt. Dies weiter bevorzugt in beiden Betriebsarten, also sowohl in der Betriebsart, bei welcher vor einer Abreinigung zunächst selbsttätig eine Räumlichkeit erfasst wird als auch in der Betriebsart, in welcher eine Abreinigung anhand einer zuvor mittels Teach-in-Verfahrens abgelegten Karte erfolgt. Das eine oder die mehreren Sensormittel sind hierbei so ausgerichtet und positioniert, dass eine Rundum-Erkennung von Hindernissen und Raumbegrenzungen erreicht ist. So ist der Roboter in der Lage, in jeder Position innerhalb des Raumes Entfernung und Richtung von Hindernissen bzw. Raumbegrenzungen zu erfassen, dies weiter bevorzugt sowohl im Nah- als auch im Fernbereich. Beispielsweise können hier entsprechend Sensormittel zur Anwendung kommen, die eine Abstandsmessung mittels eines optischen Triangulationssystems durchführen, wobei die Lichtstrahlen in der Empfängereinheit zur Verbesserung der Messungen im Fernbereich so beeinflusst sind, dass es nach einer Bündelung durch die Empfängerlinse zumindest zugeordnet zu größeren realen Entfernungen zu dem Hindernis zu größeren Abständen der auftreffenden Lichtstrahlen auf dem zugeordneten lichtempfindlichen Element kommt. So ist entsprechend eine frühzeitige Erkennung etwaiger Hindernisse oder Raumbegrenzungen ermöglicht. Diese Hinderniserkennung dient in bevorzugter Ausgestaltungen sowohl zur Kontrolle des Verfahrweges des Roboters anhand der abgelegten Karte als auch unter gegebenen Umständen auch zur selbsttätigen Erstellung einer Karte durch Abfahren einer Fläche.

Nach erfolgtem Teach-in wird durch Drücken einer entsprechenden Starttaste am Roboter oder an der Fernbedienung bevorzugt ein selbsttätiges Verfahren des Roboters zu der zu reinigenden Fläche ausgelöst. Hier überprüft der Roboter stets aktuell angesichts der durch das oder die Sensormittel erfasste Räumlichkeit, insbesondere daraufhin, ob sich der Roboter sinnvoll in dem Raum bewegt. Ist beispielsweise in der Karte erfasst, dass der Roboter eine Strecke von 1 m geradeaus fahren soll, kann es sein, dass beispielsweise durch Teppichverwerfungen oder bestimmte Polrichtungen tatsächlich eine Drift-Fahrt eintritt und der Roboter sich nach diesem einen Meter beispielsweise von einer Gangmitte deutlich entfernt. Das oder die Sensormittel erfassen die entsprechende Abweichung und lösen eine Korrektursteuerung aus, so dass sich der Roboter wieder zur Gangmitte und hier entlang über die vorgegebene Strecke bewegt. Gleiches wird auch in einem Raum erreicht, in dem die Fläche gereinigt werden soll. Es wird entsprechend aktuell immer die kartierte zu reinigende Fläche mit dem tatsächlichen Bewegen im Raum verglichen.

Mittels der beispielsweise Richtungstasten aufweisenden Fernbedienung wird der Roboter ggf. auch von der Basisstation gefahren und zu der kartenmäßig zu erfassenden Fläche oder Teilfläche gelenkt. Während dieser manuellen Fahrt merkt sich der Roboter den Weg und legt den Weg in der Karte ab. Mittels der Fernbedienung wird dieser Weg mehr oder weniger suboptimal gefahren. Ein optimierter Weg zwischen Basis und Fahrtziel sowie zurück wird weiter bevorzugt mittels interner Bahnplanungsalgorithmen errechnet und später benutzt. Kollisionsvermeidungsstrategien für fixe und temporäre Hindernisse werden bevorzugt gleichfalls genutzt. Die hinterlegte Strecke kann somit systemintern bei mehrmaliger, automatischer Anfahrt und Rückfahrt optimiert und gespeichert werden.

Zudem wird vorgeschlagen, dass wahlweise auslösbar der Roboter zufolge sensormäßig erfasster Raumbegrenzungen eine Optimierung seiner Bewegungsbahn jedenfalls betreffend eine durch Teach-in vorgegebene Fläche vornimmt. So wurden beispielsweise bei einem ersten Verfahren zu oder in einem Raum, welches Verfahren dann auch das Teach-in darstellte, gewisse Hindernisse, wie beispielsweise Möbel, umfahren und deshalb ein nicht geradliniger Weg gewählt. Der Roboter überprüft aufgrund seiner sensormäßigen Erfassung sowohl die Raumbegrenzungen als auch die Verfahrstrecke stets neu in Abständen von bevorzugt weniger als 1 Sekunde, weiter bevorzugt weniger als 0,5 Sekunden. Sofern in der Karte ein Hindernis in der Verfahrstrecke abgelegt ist und dieses beim neuerlichen Abfahren zur Abreinigung der Fläche nicht mehr vorhanden ist, tastet sich der Roboter bevorzugt langsam an, den Weg stets etwas mehr begradigend, bis er die gesamte Strecke dann gerade durchfährt. Ist hingegen entgegen den Informationen aus der Karte im direkten Verfahrweg ein Hindernis erkannt, so wird ein neuer Weg um das Hindernis herum berechnet.

In diesem Zusammenhang erweist es sich weiter als besonders vorteilhaft, wenn die in dem Roboter vorhandene Karte und / oder eine erstellte Teilkarte im Hinblick auf vom Roboter selbst im Zuge des Verfahrens erfasste Hindernisse bzw. entgegen den Informationen aus der Karte nicht mehr erfasste Hindernisse modifiziert wird, so dass entsprechend der neu zurückgelegte Verfahrweg als neue Wegpunktliste gespeichert wird. Im Falle von nicht mehr vorhandenen Hindernissen verblassen diese also praktisch in der abgelegten Karte.

Weiter ist bevorzugt vorgesehen, dass der Roboter ein gewisses Toleranzfeld entlang seiner Reinigungsfahrt mit einbezieht. Will der Benutzer beim Teach-in bspw. eigentlich ein exaktes Entlangfahren an einer Fußleiste erreichen, um bis dorthin zu reinigen, sich tatsächlich aber eine Schlängelfahrt ergibt, erkennt der Roboter in dem Toleranzfeld, bspw. bis zu einem halben Meter von der tatsächlichen Linie seitlich entfernt, dass dort eine Wandbegrenzung ist, an der er entlangfahren muss. Es können sich jedoch auch Fälle ergeben, bei denen ein solches exaktes Entlangfahren bspw. an einer Wand eben nicht gewünscht ist, da in diesem Bereich bspw. kein Teppich liegt. So ist in einer weiter bevorzugten Ausgestaltung eine Aktivierung bspw. Deaktivierung des Toleranzfeldes vorgesehen, bspw. in Form einer Taste "exakt fahren" und einer Taste "nicht exakt fahren" unmittelbar am Roboter oder weiter bspw. an der Fernbedienung.

Der Roboter kann in einer Weiterbildung des Erfindungsgegenstandes zufolge eines Rundum-Sensors eine kartenmäßige Erfassung eines Raumes ohne Umherfahren durchführen. So ist der Roboter entsprechend bevorzugt ausgebildet zur Erstellung einer raumbezogenen Karte, bei welcher Erstellung der Roboter auf der Fläche des Raumes steht und bevorzugt allein durch Rundum-Abtastung mittels des Sensors insbesondere die Raumbegrenzung abtastet und deren Entfernungen zum Roboter ermittelt. Die entsprechenden Signalwerte werden umgesetzt zur Erstellung einer entsprechenden Raumkarte. Gegebenenfalls kann der Roboter, insbesondere bei größeren, die Rundum-Messung störenden Hindernissen im Raum zur Kartierung desselben mehrere Punkte auf der Fläche anfahren, um so durch die Summe der Teilkartierungen eine Gesamtkartierung des Raumes zu erreichen. Der Rundum-Sensor wird weiter bevorzugt auch zur Abstands- bzw. Hindernis- oder Randbegrenzungsmessung während des Reinigungsbetriebes herangezogen. Als Rundum-Sensor können beispielsweise Infrarotlicht-Sensoren Verwendung finden, die um eine Vertikalachse des Roboters umlaufend angeordnet sind und so den gesamten 360°-Bereich abtasten. Entsprechend sind auch zugehörige Empfänger positioniert. Alternativ ist zur Ausformung eines Rundum-Sensors beispielsweise ein Infrarotlicht-Sensor oder ein Ultraschall-Sensor drehbar an bzw. auf dem Roboter angeordnet, der um eine Vertikalachse des Roboters umläuft und nach radial außen abstrahlt, wobei der entsprechende Empfänger bevorzugt mitläuft. Weiter alternativ dreht allein der Sender, wobei umfangsmäßig des Roboters bzw. umfangsmäßig bezogen auf eine Vertikalachse des Roboters mehrere Empfänger angeordnet sind. Auch können entsprechend mehrere Sender umfangsmäßig angeordnet sein, wobei nur ein Empfänger rotierend angeordnet ist.

Ein Raum bzw. eine Fläche oder eine Teilfläche kann vom Roboter kalendermäßig und / oder nach Ablauf einer vorgegebenen Zeitspanne angefahren und reinigend abgefahren werden. Es ist entsprechend bevorzugt in dem Roboter eine zeitlich orientierte Abreinigungsroutine hinterlegt, die die gezielte Abreinigung von kartenmäßig hinterlegten Räumen und / oder Teilflächen auslöst.

Mittels der vorgesehenen globalen Navigation kann sich der Reinigungsroboter generell beispielsweise in einer Wohnung zurechtfinden. Anhand der intern aufgebauten Karte findet der Reinigungsroboter bestimmte Stellen in der Wohnung wieder, d.h. der Roboter kann sich in der Wohnung lokalisieren. Der Roboter fährt auf Befehl hin den kartenmäßig erfassten Raum an, um entsprechend der Befehlseingabe entweder die gesamte kartierte Fläche oder eine entsprechend kartierte Teilfläche des Raumes sinnvoll zu reinigen. Abschließend verfährt der Roboter bevorzugt zurück, beispielsweise zur Basisstation, an welcher beispielsweise eine Aufladung der roboterseitigen Akkumulatoren, ggf. auch eine Entleerung des Schmutzsammelbehälters erfolgt. Auch kann der Roboter z.B. mittels einer Fernbedienung gezielt in einen Bereich (definierte Koordinate im Raum) gerufen werden, um hier z.B. einen Schmutzfleck abzusaugen oder von der Koordinate weiter per Joystick an der Fernbedienung gefahren zu werden.

Als Fernbedienung können klassische Infrarot- oder Funkfernbedienungen, weiter beispielsweise Ultraschallfernbedienungen dienen. Auch ist zur Fernbedienung beispielsweise ein Mobiltelefon oder ein PDA mittels spezieller Software und Bluetooth denkbar, darüber hinaus auch die Fernbedienung mittels eines PCs.

Auch ist die definierte Flächenreinigung bevorzugt mit dem Akkumulator-Management kombiniert. So ist es ermöglicht, den Roboter nicht starten zu lassen, wenn die Akkumulator-Kapazität für die gewünschte Fläche nicht mehr ausreicht. Dieser Zustand kann dem Benutzer visuell angezeigt werden. Der ausgelöste Befehl zur Abreinigung einer bestimmten Fläche (gesamte Fläche oder Teilfläche) löst hierbei entsprechend zunächst eine Aufladung des Akkumulators und hiernach den selbsttätigen Start des Reinigungsroboters aus.

Der Füllstand der Akkumulatoren wird hierbei weiter von der Rechnereinheit kontrolliert und für Entscheidungen hinzugezogen, die die Restlaufzeit und den Zeitpunkt der Rückkehr bestimmen.

In einem weiter beispielsweise vorgesehenen Routenplaner können verschiedene Verfahren, wie z.B. der potentialkartenbasierte "Wave-Front-Planner" zum Einsatz kommen, die die kürzeste Strecke von der aktuellen Position zum Ziel unter Berücksichtigung von Hindernissen berechnen und diesen Weg als Liste von Koordinaten wiedergeben. Hierbei wird weiter beispielsweise eine Optimierung mit einem "Line of Sight"-Algorithmus durchgeführt.

Es werden optische und / oder akustische Messmittel zur Bestimmung von Abstandsinformationen eingesetzt, die in einer Rechnereinheit mit Speicher zur Verfügung gestellt werden. Zusätzlich können diverse Bedieneinheiten, wie beispielsweise ein Joystick oder Tasten auf dem Gerät, eine Leine zum Hinterherziehen, ein Stab zum Schieben, eine Sprachsteuerung oder andere Bedienkonzepte eingesetzt werden.

Nachstehend ist die Erfindung anhand der beigefügten Zeichnung, welche lediglich ein Ausführungsbeispiel darstellt, näher erläutert. Es zeigt:

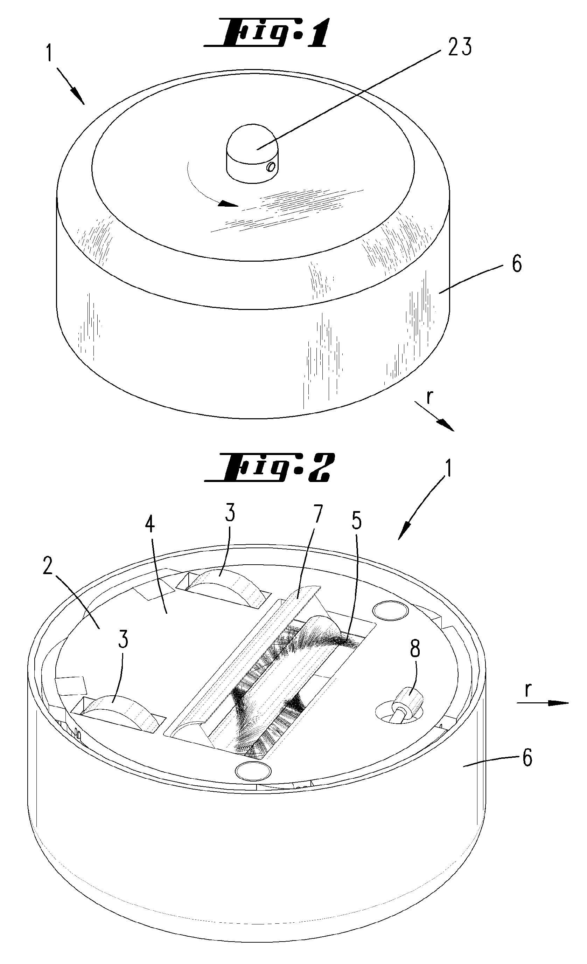

- Fig. 1: einen Reinigungsroboter in perspektivischer Darstellung;
- Fig. 2: eine perspektivische Unteransicht gegen den Reinigungsroboter;
- Fig. 3: eine schematische Grundrissdarstellung einer beispielhaften Wohnung mit mehreren Räumen;
- Fig. 4: eine schematische Darstellung einer abgelegten, teilweisen Kartierung der Räume gemäß Fig. 3;
- Fig. 5: die vergrößerte Darstellung eines Raumgrundrisses gemäß dem Bereich V in Fig. 3 mit in gestrichelter Linienform wiedergegebenem Verfahrweg des Roboters zur Kartierung des Raumes;
- Fig. 6: die entsprechende in der Karte hinterlegte Kartierung des Raumes gemäß Fig. 5;
- Fig. 7: eine der Fig. 5 entsprechende Darstellung, jedoch bei einer selbsttätigen Erfassung der Räumlichkeit durch den Roboter;
- Fig. 8: die in der Karte hinterlegte Kartierung einer Teilfläche eines bereits vollständig kartierten Raumes;
- Fig. 9: eine der Fig. 8 entsprechende Grundrissdarstellung des Raumes mit in strichpunktierter Linienart wiedergegebenem Verfahrweg des Roboters zur Abreinigung der in der Karte abgespeicherten Fläche.

Dargestellt und beschrieben ist ein Reinigungsroboter 1 in Form eines Bodenstaub-Aufsammelgerätes mit einem Chassis 2, welches unterseitig, dem zu pflegenden Boden zugewandt, elektromotorisch angetriebene Verfahrräder 3 sowie eine über die Unterkante des Chassisbodens 4 hinausragende, gleichfalls elektromotorisch angetriebene Bürste 5 trägt. Darüber hinaus dient das Chassis 2 zur Aufnahme eines nicht dargestellten Staubsammelbehälters sowie eines weiter nicht dargestellten Akkumulators zum Antrieb der Verfahrräder 3 sowie der Bürste 5. Weiter wird über den Akkumulator auch eine in dem Reinigungsroboter 1 integrierte Steuerungselektronik versorgt.

Das Chassis 2 ist überfangen von einer Gerätehaube 6, wobei das Bodenreinigungsgerät 1 bevorzugt einen kreisförmigen Grundriss aufweist.

Die Verfahrräder 3 sind in üblicher Verfahrrichtung r des Reinigungsroboters 1 der Bürste 5 nachgeordnet, wobei weiter bevorzugt der Bürste 5 nachgeordnet eine kehrblechartige Schmutzrampe 7 vorgesehen ist, über welche der abgebürstete Schmutz in die behälterartige Aufnahme abgeworfen wird.

In üblicher Verfahrrichtung r ist bevorzugt der Bürste 5 vorgeordnet ein Stützrad in Form eines Mitlaufrades 8 positioniert, zufolge dessen eine Dreipunktauflage des Reinigungsroboters 1 auf dem zu pflegenden Boden erreicht ist.

Weiter ist der Reinigungsroboter 1 bevorzugt mit einem Sensormittel 23 zur Hinderniserkennung versehen. Hierbei kann es sich um Abstandssensoren, beispielsweise Ultraschall- oder Infrarotsensoren handeln, weiter auch um eine stoßsensitive Hinderniserkennung gemäß der bereits erwähnten DE 103 57 636 A1. Dargestellt ist ein um die Vertikalachse des Roboters 1 im Betrieb desselben stetig umlaufendes Sensormittel 23 zur Rundum-Erfassung infolge einer Abstandsermittlung.

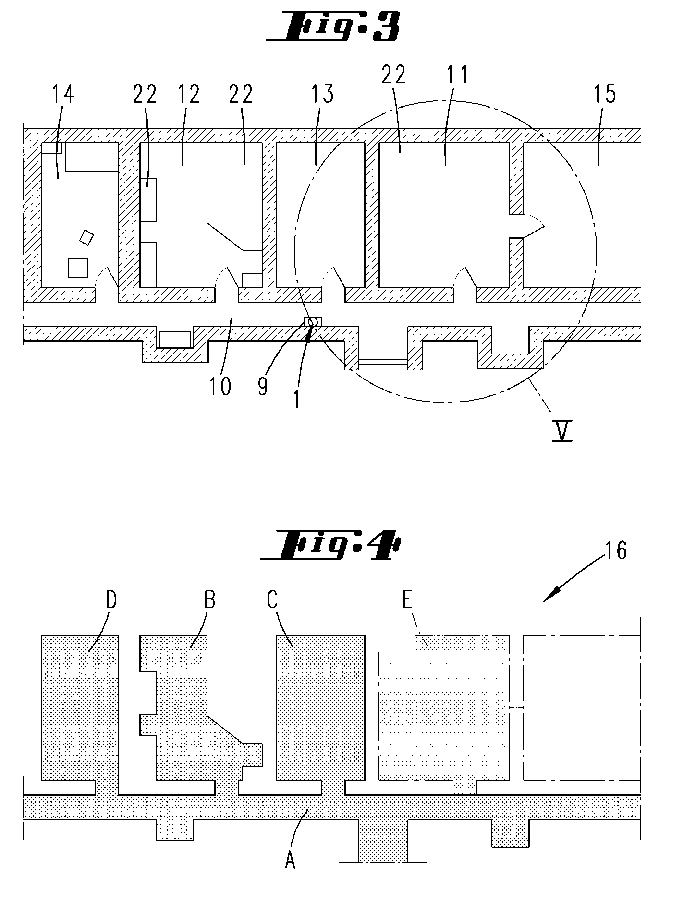

Zugeordnet dem Reinigungsroboter 1 ist weiter bevorzugt eine in Fig. 3 schematisch dargestellte Basisstation 9 vorgesehen. Diese ist in der Regel Ausgangspunkt für die vom Roboter 1 durchzuführenden Reinigungsvorgänge und dient darüber hinaus der Aufladung des roboterseitigen Akkumulators, ggf. auch der Entleerung des roboterseitigen Staubaufnahmebehältnisses.

In Fig. 3 ist ein schematischer Grundriss einer Wohnung mit mehreren Räumen 10 bis 15 dargestellt, wobei der Raum 10 ein langgestreckter Flur mit Vor- und Rücksprüngen ist, über welchen die Räume 11 bis 14 zugänglich sind. Der Raum 15 ist lediglich mittelbar über den Raum 11 erreichbar. Die Basisstation 9 ist etwa mittig der Längserstreckung des flurartigen Raumes 10 positioniert.

In dem Reinigungsroboter 1 ist in einem nicht flüchtigen Speicher eine elektronisch erstellte Karte 16 abgelegt. Diese wurde durch entsprechendes Abfahren der betreffenden Räume unter Berücksichtigung vorliegender Hindernisse 22, wie beispielsweise Schränke, selbsttätig angefertigt oder mittels eines Teach-in-Verfahrens erstellt. Wie aus der Darstellung in Fig. 4 zu erkennen, bezieht sich die Karte 16 auf die Räume 10 und 12 bis 14, während die Räume 11 und 15 noch nicht kartiert sind.

Anhand der Karte 16 ist auf ein vorbestimmtes Signal hin, beispielsweise ausgelöst über eine Fernbedienung, das gezielte Anfahren eines Raumes 10, 12 bis 14 ermöglicht, woraufhin dann die Bodenreinigung in dem angefahrenen Raum erfolgt.

Zur Kartierung beispielsweise des Raumes 11 wird der Reinigungsroboter 1 zunächst in den betreffenden Raum geleitet, dies beispielsweise mittels der Fernbedienung. Die Kartierung erfolgt wahlweise zufolge selbsttätigen Erfassens der Räumlichkeit durch den Roboter 1 oder durch ein anleitendes Abfahren (Teach-in) der Flächengrenzen.

So wird bei dem Teach-in-Verfahren der Roboter 1 zunächst innerhalb des Raumes 11 zu einem ersten Punkt 18 geführt, wonach dieser über einen Befehl, ausgelöst über die Fernbedienung oder über Tastendruck am Roboter, innerhalb der Karte 16 markiert wird. Dieser Punkt 18 entspricht dem Startpunkt zur Erfassung der Raumfläche. Ferngesteuert wird der Reinigungsroboter entlang der Außenkontur der Fläche verfahren, wobei jeder weitere Punkt 19 bis 21 einen Fahrrichtungswechsel bedeutend in der Karte markiert wird. Zum Abschluss wird der Roboter 1 zum Ausgangspunkt 18 geführt, an welcher Stelle durch einen weiteren Befehl verfügt wird, dass dieser Punkt 21 den Abschluss der Raumerkennung darstellt.

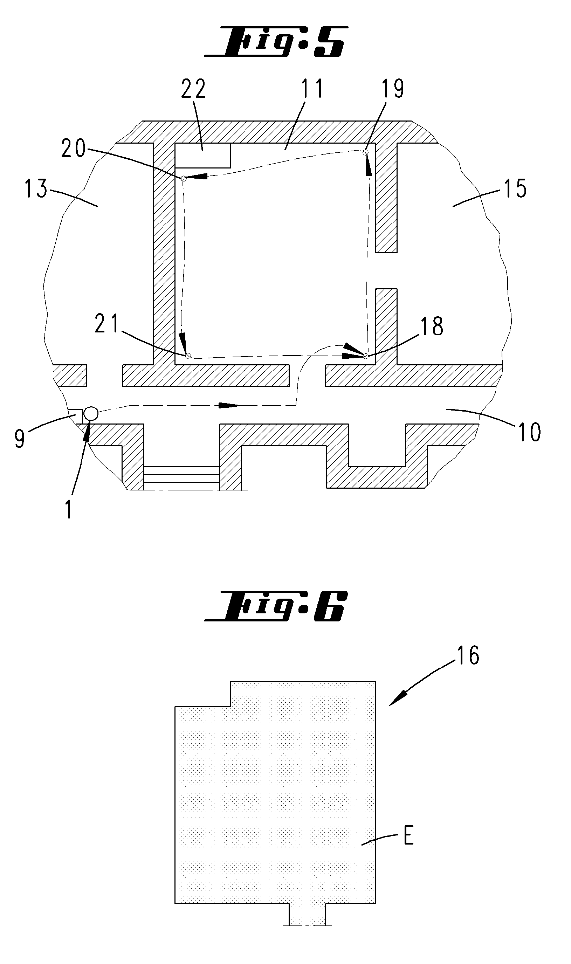

Durch die ferngesteuerte Verlagerung entlang der späteren Umrisskante der Fläche ist der Verfahrweg des Roboters 1 suboptimal. Mittels Algorithmen wird aus den hinterlegten Punkten 18 bis 21 jeweils ein, zwei Punkte miteinander verbindender Linienzug erstellt, wonach entsprechend die in der Karte 16 abgelegte Kartierung gemäß der Darstellung in Fig. 6 optimiert ist.

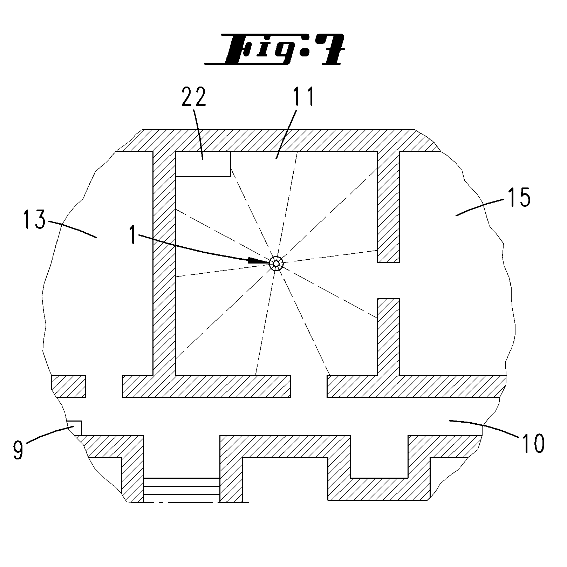

In Fig. 7 ist der Vorgang zur selbsttätigen Raumerfassung durch den Roboter 1 schematisch dargestellt. Zufolge des Rundum-Sensormittels 23 ist die kartenmäßige Erfassung des Raumes ohne Umherfahren des Roboters 1 durchführbar. Mittels des Sensormittels 23 werden Richtung und Abstand der Hindernisse bzw. Raumbegrenzungen erfasst, aus welchen ermittelten Werten die Kartierung des Raumes erstellt wird, nach welcher Karte anschließend, bevorzugt unmittelbar nach Kartenerstellung, die Abreinigung der Fläche erfolgt.

Die einzelnen in der Karte 16 abgelegten Räume 10 bis 14 sind des Weiteren bevorzugt in der Karte 16 eindeutig identifiziert, beispielsweise mit einer Kennung A bis E.

Um nicht zwingend den gesamten Boden eines Raumes zu reinigen, sondern vielmehr beispielsweise einen regelmäßig stärker verschmutzten Bodenbereich innerhalb eines Raumes gesondert zu reinigen, ist eine weitere Kartierung der einzelnen Räume möglich, zum Ablegen von Teilbereichen in der Karte 16. Diese Teilbereiche definieren für sich gesonderte Flächen, die ggf. nebeneinander gleichsam im Speicher abgelegt sind. Wird durch einen entsprechenden Befehl das Ansteuern und Abreinigen eines solchen Teilbereiches gefordert, so verfährt der Roboter 1 bevorzugt selbsttätig in den betreffenden Raum, ohne einen Hinweis darauf, dass es sich hierbei nur um einen Teilbereich einer gleichfalls in der Karte 16 abgespeicherten Gesamtfläche handelt.

Alternativ wird, wie weiter auch dargestellt, eine Unterkartierung vorgenommen, zum Ablegen von Teilbereichen innerhalb der Karte 16. Diese Teilbereiche definieren jeweils einen Sonderbereich S innerhalb eines Raumes.

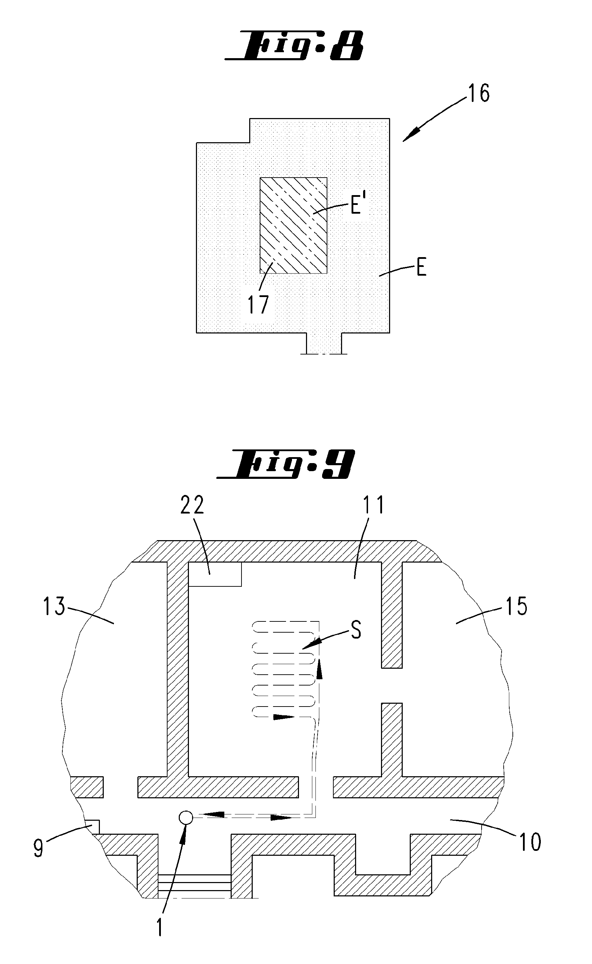

Hierzu wird ein Teilbereich 17 innerhalb einer vorliegenden Karte eines Raumes, beispielsweise des Raumes 11, abgelegt (vgl. Figuren 8 und 9).

Das Anlegen der Kartierung der Teilbereiche erfolgt nach demselben Teach-in-Prinzip wie vorbeschrieben bezüglich der gesamten Raumerfassung.

Der Teilbereich 17 der Gesamtfläche E des Raumes 11 trägt eine eigene Kennung, hier beispielsweise E'. Somit ist auch dieser Teilbereich 17 bzw. darüber hinaus weitere Teilbereiche (auch innerhalb desselben Raumes, ggf. sich überlappend mit weiteren Teilbereichen) eindeutig identifizierbar.

Der in der Karte 16 abgelegte Teilbereich 17 ist wie auch die Räume 10 bis 14 insgesamt gezielt anfahrbar. Hierzu wird dem Roboter 1 beispielsweise mittels einer Fernbedienung, weiter beispielsweise über einen internen Kalender, ein Befehl zum Anfahren der Bereiche übermittelt, woraufhin dieser zufolge der abgelegten Karte 16 den kürzesten Weg zum Ziel ermittelt und entlang diesem verfährt, dies weiter unter Berücksichtigung etwaiger bekannter Hindernisse 22, die gleichfalls in der Karte 16 berücksichtigt sind.

Verfährt der Reinigungsroboter 1 zufolge eines entsprechenden Signals beispielsweise zu einem Sonderbereich S, so steuert dieser zunächst den ersten Punkt 18 des Teilbereiches 17 an, wonach innerhalb des abgelegten Teilbereiches 17 eine Abreinigung des Bodens gemäß der Darstellung in Fig. 9 erfolgt, dies beispielsweise durch mäanderförmige Abarbeitung der Sonderfläche S. Die Abreinigung einer Gesamtfläche (bspw. gescannter Raum E) erfolgt bevorzugt auf die gleiche Weise.

Bevorzugt verfährt der Reinigungsroboter 1 nach Abschluss der Flächenreinigung selbsttätig zurück zur Basisstation 9 oder verfährt selbsttätig je nach aufgenommenem Signal zu einem nächsten Raum oder Sonderbereich, um dessen Boden zu reinigen.

Erfasst der Reinigungsroboter 1 zufolge der vorgesehenen Hinderniserkennung bzw. zufolge der vorgesehenen Abstandserkennung ein neues Hindernis, so wird im Zuge des Verfahrens des Reinigungsroboters 1 bevorzugt die Karte 16, ggf. der Teilbereich 17 entsprechend modifiziert, so dass hiernach unter Berücksichtigung des neuen Hindernisses der Verfahrweg für zukünftige Verfahrbewegungen optimiert werden kann.

Weiter wird bevorzugt im Zuge des Verfahrens des Reinigungsroboters 1 durch das Sensormittel 23 die Umgebung des Roboters 1 mit den Informationen der entsprechenden Karte verglichen. Ist in dieser beispielsweise im Verfahrweg des Roboters 1 ein Hindernis markiert, welches aktuell nicht mehr vorhanden ist, und so über das Sensormittel 23 kein entsprechendes Signal empfangen wird, tastet sich der Reinigungsroboter 1 bevorzugt langsam an, den Weg bevorzugt stetig mehr begradigend, bis dieser die gesamte Strecke weiter bevorzugt gerade durchfährt. Es erfolgt hierbei entsprechend kein Umfahren eines - hier nicht mehr vorhandenen - Hindernisses. Auch hierbei kann die Karte entsprechend modifiziert werden, so dass das zuvor abgelegte Hindernis in der Karte praktisch verblasst und letztlich gelöscht wird.

### Bezugszeichenliste

- 1: Reinigungsroboter
- 2: Chassis
- 3: Verfahrräder
- 4: Chassisboden
- 5: Bürste
- 6: Gerätehaube
- 7: Schmutzrampe
- 8: Stützrad
- 9: Basisstation
- 10 - 15: Raum
- 16: Karte
- 17: Teilbereich
- 18 - 21: Punkt
- 22: Hindernis
- 23: Sensormittel

- r: Verfahrrichtung

- A - E: Kennung
- E': Kennung
- S: Sonderbereich

## Patentansprüche

1. Verfahren zum Betreiben eines Reinigungsroboters (1), vorzugsweise eines Kehr- und/oder Saugroboters, wobei der Roboter (1) eingerichtet ist, Räumlichkeiten kartenartig zu erfassen, zum Verfahren des Roboters (1) auf dem Boden eines oder mehrerer Räume (10 bis 15), und wobei weiter der Roboter (1) über Sensormittel (23) verfügt, um die Position innerhalb eines so erfassten Raumes (10 bis 15) zu bestimmen, **dadurch gekennzeichnet, dass** der Roboter (1) wahlweise zur Abarbeitung einer Fläche zufolge selbsttätigen Erfassens einer Räumlichkeit (10 bis 15) betreibbar ist wie auch zur Abarbeitung einer Fläche, die zuvor durch anleitendes Abfahren von Flächengrenzen eingegeben wurde, wobei in beiden Fällen bei einer Abarbeitung einer Fläche eine Überprüfung der vorgegebenen Strecke anhand von aktuell erfassten Raumgrenzen vornehmbar ist.

2. Verfahren nach Anspruch 1, **dadurch gekennzeichnet, dass** mehrere Teach-in-Flächen speicherbar sind.

3. Verfahren nach Anspruch 2, **dadurch gekennzeichnet, dass** eine erste Teach-in-Fläche sich innerhalb oder überschneidend zu einer zweite Teach-in-Fläche befindet.

4. Verfahren nach einem der vorhergehenden Ansprüche, **dadurch gekennzeichnet, dass** die Sensormittel (25) so eingerichtet sind, dass der Roboter (1) in jeder Position eine Richtung und Entfernung einer Raumbegrenzung erkennt und dass unmittelbar nach Erfassen einer Abweichung der tatsächlichen Position von der aufgrund eines gespeicherten Ablaufs vorgegebenen Position eine Korrektur einer Fahrbewegung erfolgt.

5. Verfahren nach einem der vorhergehenden Ansprüche, **dadurch gekennzeichnet, dass** wahlweise auslösbar der Roboter (1) zufolge sensormäßig erfasster Raumbegrenzungen eine Optimierung seiner Bewegungsbahn jedenfalls betreffend eine durch Teach-in vorgegebene Fläche vornimmt.

6. Verfahren nach einem der vorhergehenden Ansprüche, **dadurch gekennzeichnet, dass** der Roboter (1) zufolge eines Rundum-Sensors eine kartenmäßige Erfassung eines Raumes (10 bis 15) ohne Umherfahren durchführen kann.

## Claims

1. Method for operating a cleaning robot (1), preferably a sweeping and/or vacuuming robot, the robot (1) being configured to capture spaces in a map-like manner in order to move the robot (1) on the floor of one or more rooms (10 to 15), and the robot (1) further comprising sensor means (23) for determining the position within a room (10 to 15) captured in this way, **characterised in that** the robot (1) can be operated as desired for working on a surface according to automatic capture of a space (10 to 15) and also for working on a surface which has been previously input by means of a teach-in drive around the surface borders, it being possible in both cases to check the predetermined path when working on a surface on the basis of currently captured room borders.

2. Method according to claim 1, **characterised in that** a plurality of teach-in surfaces can be stored.

3. Method according to claim 2, **characterised in that** a first teach-in surface is located within or overlapping a second teach-in surface.

4. Method according to any of the preceding claims, **characterised in that** the sensor means (25) are configured in such a way that the robot (1) identifies a direction and distance of a room boundary in every position, and **in that** a movement is corrected immediately after a deviation is detected between the actual position and the position which has been predetermined on the basis of a stored course.

5. Method according to any of the preceding claims, **characterised in that**, in an optionally activatable manner, the robot (1) optimises its movement path in each case with regard to a surface predetermined by a teach-in and according to room boundaries captured by a sensor.

6. Method according to any of the preceding claims, **characterised in that** the robot (1) can capture a room (10 to 15) on a map without travelling around, on account of an all-round sensor.

## Revendications

1. Procédé destiné au fonctionnement d'un robot de nettoyage (1), de préférence d'un robot balayeur et/ou aspirateur, dans lequel le robot (1) est conçu pour analyser des locaux d'une manière cartographique, pour faire circuler le robot (1) sur le sol d'une ou de plusieurs pièces (10 à 15), et le robot (1) disposant en outre de moyens de détection (23) pour déterminer la position à l'intérieur d'une pièce (10 à 15) ainsi analysée, **caractérisé en ce qu'**on peut faire fonctionner le robot (1) au choix aussi bien pour le traitement d'une surface à la suite d'une analyse indépendante d'un local (10 à 15) que pour le traitement d'une surface qui a été enregistrée au préalable au moyen de départs d'enseignement à partir de limites de la surface, un contrôle du trajet prédéterminé pouvant être réalisé dans les deux cas lors d'un traitement d'une surface sur la base de limites de pièces effectivement analysées.

2. Procédé selon la revendication 1, **caractérisé en ce que** plusieurs surfaces d'apprentissage peuvent être mises en mémoire.

3. Procédé selon la revendication 2, **caractérisé en ce qu'**une première surface d'apprentissage se trouve à l'intérieur d'une deuxième surface d'apprentissage ou en chevauchement avec celle-ci.

4. Procédé selon l'une des revendications précédentes, **caractérisé en ce que** les moyens de détection (25) sont conçus de telle sorte que le robot (1) reconnaît une direction et une distance d'une limite de pièce dans n'importe quelle position et **en ce qu'**immédiatement après le constat d'une déviation de la position effective par rapport à la position prédéterminée sur la base d'un tracé mis en mémoire, une correction d'un mouvement de circulation est réalisée.

5. Procédé selon l'une des revendications précédentes, **caractérisé en ce que** d'une façon pouvant être déclenchée au choix, le robot (1) procède à une optimisation de son itinéraire de déplacement concernant dans chaque cas une surface prédéterminée par un apprentissage à la suite de l'analyse par le biais d'une détection des limites d'une pièce.

6. Procédé selon l'une des revendications précédentes, **caractérisé en ce que** le robot (1) peut exécuter une analyse cartographique d'une pièce (10 à 15) sans la parcourir au moyen d'un capteur panoramique.
